# EUROPÄISCHE PATENTSCHRIFT

(11) **EP 0 639 759 B1**
(45) Veröffentlichungstag und Bekanntmachung des Hinweises auf die Patenterteilung: **23.04.1997**
(21) Anmeldenummer: 94108050.9
(22) Anmeldetag: 26.05.1994
(51) Int. Cl.: G01L 1/10, G01G 3/16

(54) **Flache einstückige Messsaite mit zwei Knoten zur Weg- oder Kraftmessung**
One-piece flat vibratory measuring element with two nodes for measuring displacement or force
Lame vibrante de mesure, plat et monopièce, à deux noeuds, pour la mesure de déplacement ou de force

(30) Priorität: 20.08.1993 CH 2490/93
(43) Veröffentlichungstag der Anmeldung: 22.02.1995
(73) Patentinhaber: Mettler-Toledo AG, CH-8606 Greifensee (CH)
(72) Erfinder: Meier, Eugen, CH-8706 Meilen (CH)

(56) Entgegenhaltungen:
- EP-A- 0 030 741
- DE-A- 2 448 749
- DE-A- 3 144 856
- DE-A- 3 709 096
- US-A- 4 703 816

## Beschreibung

Die Erfindung betrifft eine flache einstückige, in Richtung aus ihrer Ruheebene zu schwingen bestimmte Messsaite, mit zwei Befestigungslappen, einer Schwingsaite und zwei die Schwingsaite mit den Befestigungslappen verbindenden Koppelgliedern, sowie zwei an den Verbindungsstellen der Schwingsaite mit den Koppelgliedern ausgebildeten Knotenbereichen.

Messsaiten der genannten Gattung finden unter anderem Verwendung in Waagen. Die Schwingsaite, an ihren Enden eingespannt, wird dabei zu Querschwingungen angeregt, deren Frequenz lastabhängig variiert. Diese Frequenzänderungen dienen dann, auf geeignete Weise elektronisch ausgewertet, zur Bestimmung der jeweils auf die Saite wirkenden Kraft.

Aus der CH-A-648663 ist bereits eine flache Messsaite bekannt, welche an den beiden Saitenenden eingespannt ist. Zwischen der im zentralen Bereich liegenden, die Schwingungen ausführenden eigentlichen Schwingsaite und je an die Einspannstellen anschliessenden Koppelgliedern, welche die Enden der Schwingsaite mit den Einspannstellen verbinden, sind zwei Paar Lappen angeordnet, die rechtwinklig zu der Schwingsaite und zu den Koppelgliedern liegen. Auf den vier Lappen sind, zur Erhöhung von deren Masse, Zusatzmassen befestigt. Die beiden Lappenpaare mit den darauf befestigten Zusatzmassen bilden infolge ihrer Trägheit die beiden Schwingungsknoten der dazwischen liegenden Saite. Diese im Verhältnis zur Masse der Schwingsaite grossen Knotenmassen erlauben eine wirkungsvolle Abkoppelung der Schwingsaite von der Umgebung, d.h. von der Einspannstelle der Messsaite an ihren beiden Enden.

Die Herstellung einer solchen Messsaite ist äusserst aufwendig, da sowohl die aus einem Blech ausgestanzten Teile äusserst genau hergestellt werden müssen als auch die auf den Lappen aufzubringenden Massen, welche zudem noch mit den Lappen durch Kleben, Löten oder Schweissen verbunden werden müssen. Wegen der im Verhältnis zur Schwingsaite grossen Masse der Zusatzmassen ist diese Anordnung nur in vertikaler Lage einsatzfähig.

Aus der EP-A2-0030741 ist weiter eine Anordnung zur Isolation der Schwingungen einer Messsaite bekannt. Diese Messsaite weist wiederum zwei Befestigungsenden auf, zwischen denen die eigentliche Schwingsaite eingespannt gehalten ist. Zwischen den Befestigungsenden und den Enden der eingespannten Schwingsaite, die quer (transversal) zu den Klemmflächen an den Befestigungsenden schwingt, sind Mittel zum Abkoppeln der durch die Schwingsaite verursachten Schwingungen offenbart. Diese Isolationsmittel bestehen aus elastischen, quer zur Schwingsaite verlaufenden Stegen. An den beiden innenliegenden, mit den Enden der Schwingsaite verbundenen Querstegen sind parallel zur Saite verlaufende Isolationsmassen angebracht. Diese Isolationsmassen weisen eine Resonanzfrequenz auf, die tiefer liegt als die Frequenz der Schwingsaite, so dass eine wirkungsvolle Isolation zwischen der Schwingung der Saite und den Befestigungsenden vorliegt. Die Isolationsmassen verhindern einerseits durch ihre im Verhältnis zur Schwingsaite grossen Massen und andererseits durch die geringere Schwingungsfrequenz eine Übertragung von transversalen Schwingungen in die Umgebung.

Aus der Internationalen Patentanmeldung WO 93/10428 ist weiter eine Messsaite bekannt, welche an ihren Enden in ringförmig ausgebildeten Einspannstellen geklemmt gehalten wird. In der Mitte der zwischen den beiden Einspannstellen verlaufenden Schwingsaite sind in Gestalt eines "H" Gewichte angebracht, welche dazu dienen sollen, Störfrequenzen zu verhindern. Zwischen der in der Mitte der Schwingsaite eingesetzten Zusatzmasse und den Klemmstellen sind elektrische Schwinggeber eingesetzt, welche dazu dienen, die Schwingsaite in Schwingung zu versetzen. Die Knoten der Schwingsaite befinden sich in den Enden der Schwingsaite bei den Einspannstellen. Parallel zur Schwingsaite können, zur Verminderung der Kraft auf die Schwingsaite, zusätzliche Verbindungen zwischen den Einspannstellen angeordnet sein. Je nach deren Querschnitt nehmen diese einen mehr oder weniger grossen Teil der zwischen den beiden Einspannstellen wirkenden Zugkraft auf und vemindern dadurch die Zugkraft auf die Schwingsaite.
Auch bei dieser bekannten Messsaitenanordnung erfolgt keine einwandfreie Isolation der Schwingungen der Schwingsaite bezüglich den Einspannstellen.

Aus der DE-A1-3709096 ist weiter ein Resonator zur Messung der Beschleunigung von Flugkörpern bekannt, mit einem zwischen zwei Befestigungsorganen angeordneten Schwingglied, welches in einer seine Längsachse enthaltenden Ebene schwingt und zur Isolierung von den Befestigungsorganen an seinen beiden Enden mit je einer Isolatormasse versehen ist, die mittels eines Paares von Isolatorfedern mit dem benachbarten Befestigungsorgan verbunden ist. Jedes Paar von Isolatorfedern konvergiert oder divergiert von der zugehörigen Isolatormasse weg, wobei die beiden Isolatorfedern jeweils senkrecht zu einer Bewegungslinie orientiert sind, welche die Verbindungsstelle zwischen der Isolatorfeder und der Isolatormasse schneidet und die Richtung derjenigen Reaktionsscherkraft und desjenigen Reaktionsmomentes repräsentiert, die an deren beiden Isolatorfedern benachbarten Wurzel des Schwinggliedes auftreten.
Dieser bekannte Resonator schwingt in der Ebene, in der sowohl der Schwingbalken als auch die paarweise angeordneten Isolatormassen liegen. Die Schwingknoten sollen, wenn die geometrischen Verhältnisse stimmen, bei diesem Schwingsystem in das Befestigungsorgan zu liegen kommen. Eine Entkoppelung der Schwingungen von den Befestigungsorganen ist damit nur sehr schwer über einen grösseren Frequenzbereich aufrecht zu erhalten.

Der vorliegenden Erfindung liegt die Aufgabe zugrunde, eine flache einstückige Messsaite zu schaffen, die kostengünstig herstellbar ist und eine optimale Isolation der Saitenschwingungen zur Umgebung und dadurch entsprechend grosse Schwinggüten ermöglicht. Diese Aufgabe wird durch eine Messaite nach dem Anspruch 1 gelöst.

Die elastischen Lappen, deren Wurzeln in Linie zu der Wurzel der Schwingsaite liegen, ermöglichen eine einwandfreie Kompensation der durch die Schwingsaite in die Koppelglieder eingeleiteten Querkräfte und Momente und damit die Bildung eines Knotenbereiches im Verbindungsbereich zwischen der Schwingsaite und den Koppelgliedern. Die gegenphasigen Schwingungen der Schwingsaite und der elastischen Lappen in der Ebene der kleinen Biegesteifigkeit ermöglichen es weiter, die Messsaite als Gesamtes sehr massearm auszubilden, d.h. z.B. aus Feinstblech oder anderen Materialien herzustellen, was einen lageunabhängigen Einbau der Messsaite im Messinstrument erlaubt. Die grössere spezifische Masse (Masse pro Längeneinheit) der elastischen Lappen bezüglich der Masse der Schwingsaite lässt sich in einfacher und kostengünstiger Weise dadurch realisieren, dass die Breite der elastischen Lappen grösser gewählt wird, als die Breite der Schwingsaite bei gleicher Dicke der beiden Elemente. In einer bevorzugten Ausführung liegt die Breite der elastischen Lappen im Verhältnis zur Breite der Saite bei beispielsweise 2:1.
Eine vorzugsweise dreieckförmige Ausbildung des Knotenbereichs erlaubt eine Verbindung mit den beiden elastischen Lappen sowie einem Saitenende entlang einer rechtwinklig zur Schwingsaite liegenden Linie und eine zu den Verbindungsbereichen der elastischen Lappen und der Schwingsaite exakt symmetrisch liegende Verbindung mit dem Koppelglied. Durch die Formgebung der elastischen Lappen können deren Schwingungseigenschaften den jeweiligen Anforderungen angepasst werden. Zwischen den Befestigungslappen und der Schwingsaite ausgebildete Federn ermöglichen eine Reduktion bzw. Begrenzung der auf die Schwingsaite wirkenden Kraft bei gegebener Auslenkung. Dies erlaubt eine Miniaturisierung der gesamten Messsaitenanordnung. Die Ausbildung der Feder in Gestalt eines Schlitzes in den Befestigungslappen ermöglicht es, sehr kurze Messsaiten mit geringer Masse herzustellen. Die Anordnung der Feder innerhalb des Koppelgliedes ermöglicht eine stärkere Untersetzung der Kraft auf die Schwingsaite. Ringförmig oder wellenförmig ausgebildete, in das Koppelglied eingesetzte Federn dienen zum einen als Untersetzung der auf die Schwingsaite wirkenden Kraft - in Parallelfedersystemen - und auf der anderen Seite als zusätzliche Isolatoren für allfällig durch die Knotenpunkte hindurchgelangende Schwingungen. Im weiteren ermöglichen diese Federn infolge ihres Gelenkcharakters den Einbau der Messsaiten parallel zur Ablaufebene elastischer Parallelführungen. Durch diese konstruktiven Freiheiten ergeben sich besonders einfache Randbedingungen für einen Einbau in Zellenmitte elastischer Parallelführungen, wie sie in Waagen Verwendung finden.

Anhand illustrierter Ausführungsbeispiele wird die Erfindung näher erläutert. Es zeigen:
- Figur 1: eine Draufsicht auf eine flache Messsaite,
- Figur 2: eine Seitenansicht der schwingenden Messsaite in Figur 1,
- Figur 3: eine weitere Ausgestaltung der Messsaite mit divergierenden elastischen Lappen,
- Figur 4: eine perspektivische Darstellung der Ausgestaltung der Messsaite in Figur 3 (Auslenkungen, Amplituden der Saite und der Lappen übertrieben dargestellt),
- Figuren 5-7: je eine weitere Ausbildung des Einspannlappens der Messsaite mit integrierter Feder,
- Figuren 8-11: je eine weitere Ausgestaltung der Messsaite mit in die Koppelglieder eingesetzten ringförmigen Federn,
- Figuren 12-14: je eine weitere Ausgestaltung der Messsaite mit in die Koppelglieder eingesetzten wellen- oder rechteckwellenförmigen Federn,
- Figur 15: eine weitere Ausgestaltung der Messsaite mit einer ringförmigen Feder als Teil des Einspannlappens und
- Figur 16: eine schematisch dargestellte Einbauvariante der Messsaite.

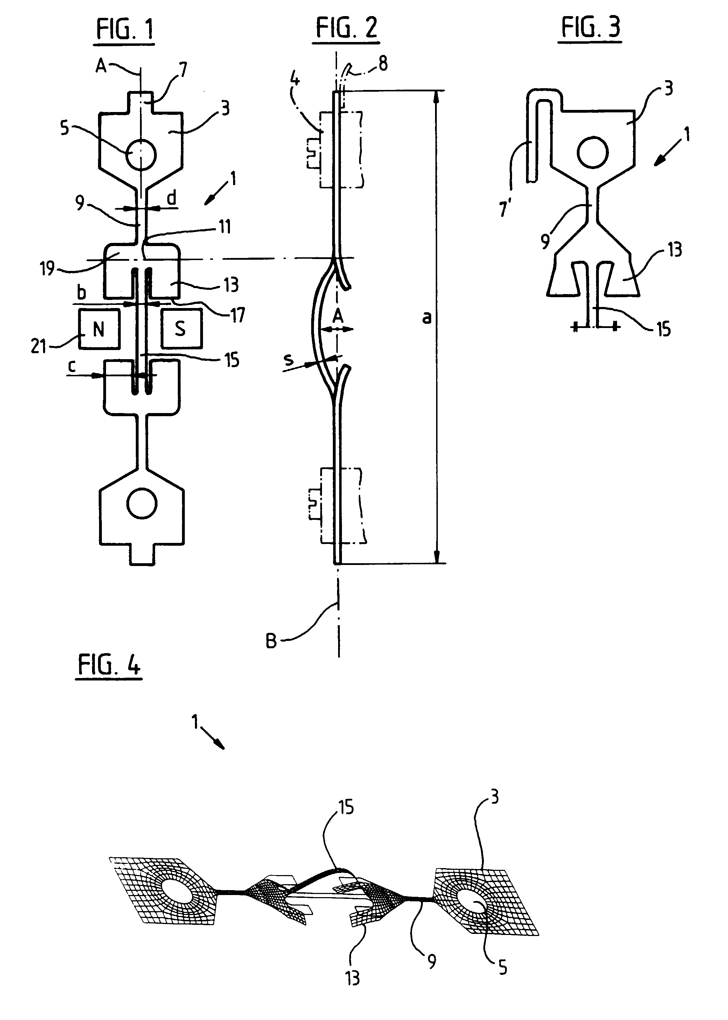

Eine flache Messsaite 1, bevorzugt aus Feinstblech hergestellt, weist an ihren Enden je einen Befestigungslappen 3 mit einem Loch oder einer Bohrung 5 zum Befestigen der Messsaite 1 zwischen zwei Einspannelementen 4 in einem Messgerät, z.B. einer Waage (nicht dargestellt), auf. An den Befestigungslappen 3 sind Kontaktlaschen oder -drähte 7 zur Herstellung einer elektrischen Verbindung zu einem Generator zur Schwingungserzeugung ausgebildet. Die Kontakt- oder Verbindungsstelle kann auch direkt an den Einspannelementen 4 sein oder auch als dünner Leiter 7', parallel zur Messsaite 1 verlaufend, ausgebildet sein (Fig. 3). Zwischen den beiden sich gegenüberliegenden, symmetrisch ausgebildeten Befestigungslappen 3 sind zwei mit den Befestigungslappen 3 verbundene Koppelglieder 9 in Gestalt von Stegen mit wesentlich geringerer Breite als die Befestigungslappen 3 ausgebildet. Die beiden Koppelglieder 9 sind ebenfalls symmetrisch angeordnet.
An den sich gegenüberliegenden, von den Befestigungslappen 3 abgewandten Enden der Koppelglieder 9 befinden sich die Wurzeln 11 von paarweise ausgebildeten elastischen Lappen 13 und einer Schwingsaite 15, deren Breite ungefähr der Breite der Koppelglieder 9 entspricht, und welche in Linie mit den Koppelgliedern 9 liegt. Die elastischen Lappen 13 und die Schwingsaite 15 liegen in Ruhestellung, d.h. nicht angeregt, in einer gemeinsamen Ebene B (Zeichnungsebene der Figur 1).
Die elastischen Lappen 13 sind parallel und in geringem seitlichem Abstand zur Schwingsaite 15 verlaufend angeordnet. Ihre freien Enden 17 liegen sich mit Abstand gegenüber. Die Länge der elastischen Lappen 13 ist wesentlich kleiner als die halbe Länge der Schwingsaite 15. Die Lappen 13 können eine rechteckige Form aufweisen oder, wie in Figur 3 dargestellt, eine von der Wurzel weg divergierende, trapezförmige Form haben. Selbstverständlich sind auch weitere Formen einsetzbar. Die Wurzeln 11 der elastischen Lappen 13 sowie die Verbindungsstelle der Schwingsaite 15 mit dem Koppelglied 9 bilden auf beiden Seiten den Knotenbereich 19 eines gekoppelten Schwingungssystems, zu dessen Betrieb die Schwingsaite 15 bevorzugt im Magnetfeld eines Permanentmagneten 21 liegend angeordnet ist. Die elektrische Anregung einer Schwingsaite 15 und die Anordnung der Permanentmagnete 21 sind aus dem Stand der Technik bekannt und werden nicht näher erläutert. Andere Anregungsmethoden sind ebenfalls möglich.

Nach der Anregung der Schwingsaite 15, in Richtung A der kleinen Biegesteifigkeit und aus der Ebene B heraus, bilden sich infolge der ebenfalls stets gegenphasig mitschwingenden elastischen Lappen 13 in dem an die Wurzeln 11 anschliessenden Bereich 19 der elastischen Lappen 13 und der Messsaite 15 im wesentlichen stehende elastische Knoten. Die in den Knotenbereich 19 eingeleiteten Querkräfte und Momente der Schwingsaite 15 sowie der zur Schwingsaite 15 benachbart angebrachten, gegenphasig schwingenden elastischen Lappen 13 heben sich gegenseitig (etwa analog wie bei einer Stimmgabel) weitgehend auf. Die an den Knotenbereich 19 angeformten Koppelglieder 9 verharren folglich in ungekrümmter Lage; dies sowohl bei festgeklemmten als auch bei lose gehaltenen Befestigungslappen 3. Die Entkoppelung der Schwingungen der Schwingsaite 15 und der beiden elastischen Lappen 13 in den Knotenbereichen 19 bewirkt einen weitgehend optimalen Erhalt der Schwingungsenergie und verhindert die Entstehung von Störresonanzen, hervorgerufen durch Schwingungen der Verbindungselemente (Koppelglieder 9, Befestigungselemente 4) oder von Knotenmassen zur Isolation der Saitenschwingungen, wie sie beispielsweise in der CH-A-662180 vorgeschlagen werden.
Die starke Reduktion des obengenannten Störpotentials in den Randstellen der Schwingsaite 15, d.h. in deren Wurzeln 11, bewirkt, dass nur eine Abschwächung der Saitenamplitude im Bereich von einigen Prozenten eintritt und folglich die Schwingung einen hohen Qualitätsfaktor (Schwingungsgüte) aufweist, so dass eine äusserst hohe Genauigkeit bei geringer Energiezufuhr erreicht werden kann.

Die geringe, kontrollierte Energiezufuhr hat ihrerseits zur Folge, dass die unerwünschte Erwärmung der Messeinrichtung verringert werden kann.

In der Darstellung in Figur 4 sind die Endlagen der Schwingsaite 15 und der vier elastischen Lappen 13 - übertrieben dargestellt - ersichtlich. Im dreieckförmig ausgebildeten Knotenbereich 19 liegen die Wurzeln 11 linienförmig nebeneinander, die Schwingungsknoten befinden sich etwa in den Wurzeln 11 nahe beim vorderen Ende des Knotenbereiches 19. Die Verbindungsstelle des Knotenbereiches 19 mit dem Koppelglied 9 bleibt dadurch über einen grossen Frequenzbereich von der Auslenkung der elastischen Lappen 13 und der Schwingsaite 15 im wesentlichen unberührt.

In einer bevorzugten Ausführungsform der Messsaite 1 weist diese folgende Massverhältnisse auf eine Länge a von 550 Teilen auf. Bei einer Dicke s von 2 Teilen beträgt die Breite b der Schwingsaite 15 ca. 6 Teile. Die beiden elastischen Lappen 13 erstrecken sich über eine Länge von je 30 Teilen in einem Abstand von 10 Teilen parallel zur Saite 15 verlaufend neben dieser. Die Breite c der elastischen Lappen entspricht 14 Teilen und ist folglich wesentlich grösser als die Breite b der Schwingsaite 15. Die Breite d der Koppelglieder 9 beträgt 6 Teile; sie ist folglich im Vergleich zur Breite der Befestigungslappen 3 (ca.100Teile) äusserst gering.

Selbstverständlich können auch wesentlich andere Massverhältnisse für entsprechende Zwecke gewählt werden.

Die wesentlich grössere spezifische Masse der elastischen Lappen 13 im Vergleich zur Masse der Schwingsaite 15 und die bevorzugten geometrischen Verhältnisse bewirken, dass die Amplitude der Schwingsaite 15 grösser ist als die Amplituden der elastischen Lappen 13, am besten ersichtlich am Anstellwinkel bezüglich der Ebene, in der die Befestigungslappen 3 liegen (vergl. Fig. 4). In der Praxis wird die Amplitude der Schwingsaite 15 durch die Anregung kontrolliert.

Um eine hohe Genauigkeit bezüglich der Symmetrie der Messsaite 1 zu erlangen, wird diese vorzugsweise durch Ätzen hergestellt. Der Ätzvorgang ermöglicht nicht nur eine hohe geometrische Genauigkeit, sondern es ergeben sich äusserst saubere wellenfreie und galvanisch gut schützbare Kanten. Dieses Herstellungsverfahren, das auch in anderen Bereichen der Technik angewandt wird, ermöglicht es, je nach Einsatzbereich, die Geometrie der Messsaite kurzfristig kostengünstig an neue Bedürfnisse oder Waagentypen anzupassen und auch weitere Verfeinerungen vorzunehmen.

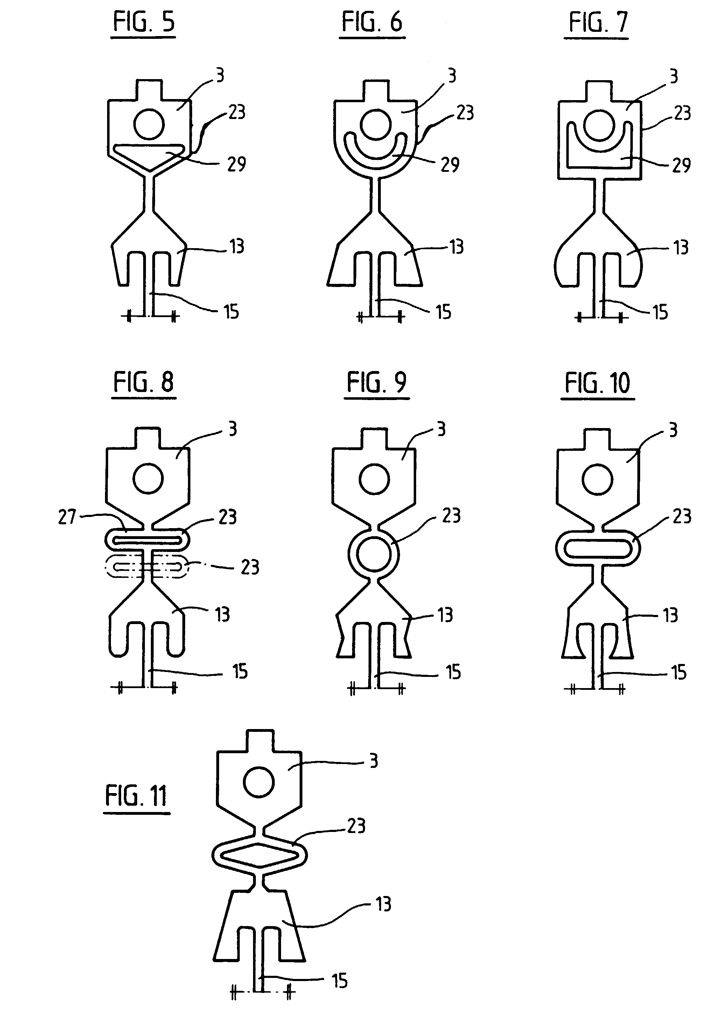

In einer weiteren Ausgestaltung der Erfindung gemäss den Figuren 5 bis 7 sind an einem Ende der Koppelglieder 9 zusätzliche Federn 23 angebracht. Die Federn 23, die Teil der monolithisch ausgebildeten Messsaite 1 sind, stellen z.B. bei einer Ankoppelung an elastische Parallelführungen, zusammen mit diesen, ein Parallelfedersystem dar. Die in den Saitenpfad eingeleitete Kraft kann dabei durch die Federkonstante dieser monolithisch integrierten Feder 23 stark untersetzt werden. Im Fall einer Waage kann ohne weiteres eine Kraftverminderung, z.B. um einen Faktor bis 300 (je nach der Grösse der Federkonstanten der Parallelführung und der Feder 23), erreicht werden. Dies ermöglicht es, die Schwingsaite 15 entsprechend feingliedriger auszubilden, um eine höhere Auflösung zu erreichen. Gleichzeitig bewirken die Federn 23 als elastische Referenz eine wesentliche Unterdrückung anelastischer Störungen (elastische Nachwirkung, Hysterese) und thermischer Störungen (Temperaturabhängigkeit des Elastizitätsmoduls) sowie eine zusätzliche Isolation von Schwingungen, welche allenfalls durch den Knotenbereich 19 hindurch in die Koppelglieder 9 gelangen können.
Diese als Referenzfedern ausgestalteten Federn 23 in der Ausgestaltung gemäss den Figuren 5 bis 7 sind Teil der Befestigungslappen 3. Mit einem Unterbruch der direkten und hartelastischen Verbindung der Koppelglieder 9 mit dem zentralen Einspannbereich der Befestigungslappen 3 durch Anbringen einer Öffnung oder eines Schlitzes 29 kann eine axiale Elastizität erlangt werden. Der Schlitz 29 kann der Kontur des Einspannlappens 3 und vorzugsweise mit etwa gleichbleibendem Abstand folgend bogenförmig (Figur 6) oder winkelig (Figur 7) ausgebildet oder durch ein dreieckiges Loch (Figur 5) erzeugt sein.

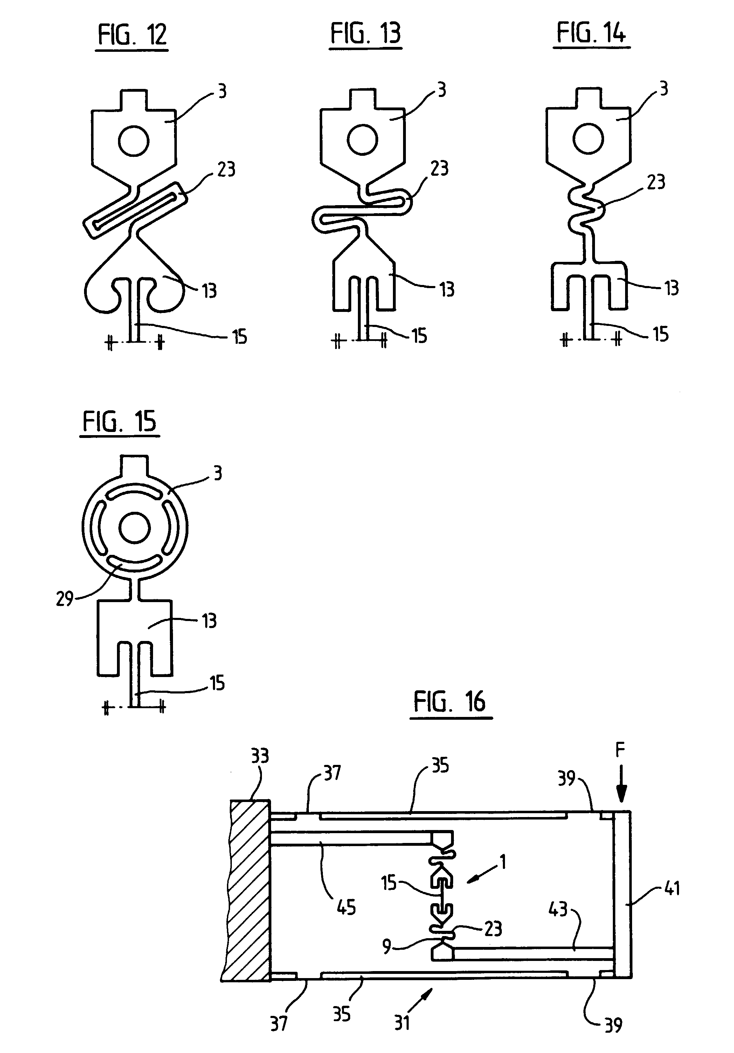

In der Ausgestaltung der Erfindung in den Figuren 8 bis 11 sind die Federn 23 innerhalb der Koppelglieder 9 in Gestalt von ringförmigen geschlossenen Federkörpern 23 ausgestaltet, an denen symmetrisch die Koppelgliedabschnitte von gleicher (Figur 9,11) oder unterschiedlicher Länge (Figur 8,10) angreifen. Ein weichelastischer Federkörper 23 weist ein Paar quer zum Koppelglied 9 verlaufende, nahe beieinanderliegende Schenkel 27 auf, die durch Halbkreisbogenabschnitte miteinander verbunden sind (Fig. 8). Es können auch zwei Federn in Serie in das Koppelglied 9 eingesetzt sein. Eine ähnliche Ausführung zeigt Figur 10, die bezüglich der Federkonstanten zwischen dem kreisförmigen Federkörper 23 in Figur 9 und demjenigen in Figur 8 liegt. Einen rautenförmigen Federkörper 23 zeigt Figur 11. Weitere Ausführungen sind in den Figuren 12 bis 14 dargestellt. Hier bilden durch einen wellen- oder rechteckwellenförmigen meanderförmigen Verlauf die Koppelglieder selbst die Federn 23.

In der Figur 15 ist eine Feder 23 mit spezieller Kraftverteilung dargestellt, bei der symmetrisch um den Einspannbereich im Zentrum des Einspannlappens 3 herum Schlitze 29 angeordnet sind.

In der Darstellung gemäss Figur 16 ist eine mögliche Einbauvariante einer erfindungsgemässen Messsaite 1 in einer elastischen Parallelführung 31 einer Waage gezeigt. An einer Konsole 33 und einem Lastaufnehmer 41 sind zwei Lenker 35 mit ihren Biegelagern 37, 39 befestigt. Der Lastaufnehmer 41 trägt auch einen unteren Halter 43 für die Messsaite 1. Ein oberer Halter 45 ist auf der Seite der Konsole 33 befestigt. Durch eine auf den Lastaufnehmer wirkende Kraft F wird die Messsaite 1 über die beiden Federn 23 belastet.

Die im Ablauf der Parallelführung auftretende kleine horizontale Verschiebung des Lastaufnehmers 41 sowie eine kleine Schrägstellung des unteren Halters 43 bei asymmetrischer Belastung werden durch die Koppelglieder 9 bzw. die Federn 23 ohne störende Verkrümmung der Messsaite 1 aufgefangen.

Die Formgebung der elastischen Lappen 13 kann in einem weiten Bereich variieren, wie in den Figuren 5 bis 14 beispielsweise angedeutet.

## Patentansprüche

1. Flache einstückige, in Richtung (A) senkrecht zu ihrer Ruheebene (B) zu schwingen bestimmte Messsaite (1), mit zwei Befestigungslappen (3), einer Schwingsaite (15) und zwei die Schwingsaite (15) mit den Befestigungslappen (3) verbindenden Koppelgliedern (9), sowie zwei an den Verbindungsstellen der Schwingsaite (15) mit den Koppelgliedern (9) ausgebildeten Knotenbereichen (19), wobei schwingsaitenseitig an den Knotenbereichen (19) je zwei parallel zur Schwingsaite (15) verlaufende, mit den Knotenbereichen (19) einseitig verbundene, senkrecht zur Ruheebene (B) gegenphasig mitschwingende weichelastische Lappen (13) angeordnet sind, deren Enden (17) mit Abstand einander gegenüberliegen, deren Dicke (s) der Dicke der übrigen Bestandteile der Messsaite (1) entspricht, und die sich in der Ruheebene (B) beidseits der Schwingsaite (15) erstrecken.

2. Messsaite nach Anspruch 1, dadurch gekennzeichnet, dass die mittlere Breite (c) der elastischen Lappen (13) grösser ist als die Breite (b) der Schwingsaite (15).

3. Messsaite nach einem der Ansprüche 1 oder 2, dadurch gekennzeichnet, dass die Breite (b) der Schwingsaite (15) grösser ist als deren Dicke (s).

4. Messsaite nach einem der Ansprüche 1 bis 3, dadurch gekennzeichnet, dass sie durch Ätzen hergestellt ist.

5. Messsaite nach einem der Ansprüche 1 bis 4, dadurch gekennzeichnet, dass der Knotenbereich (19) dreieckförmig ausgebildet ist, wobei die beiden elastischen Lappen (13) und ein Schwingsaitenende in Linie liegend an eine Dreiecksseite angrenzen und dass das Koppelglied (9) im Schnittpunkt der beiden übrigen Seiten angesetzt ist.

6. Messsaite nach einem der Ansprüche 1 bis 5, dadurch gekennzeichnet, dass zwischen der Schwingsaite (15) und den Einspannstellen (Loch 5) am Befestigungslappen (3) je eine Feder (23) ausgebildet ist.

7. Messsaite nach Anspruch 6, dadurch gekennzeichnet, dass die Feder (23) durch einen der Kontur des Einspannlappens (3) folgenden Schlitz (29) ausgebildet ist.

8. Messsaite nach Anspruch 6, dadurch gekennzeichnet, dass die Feder (23) zwischen den beiden das Koppelglied (9) mit den Befestigungslappen (3) und der Schwingsaite (15) verbindenden Enden innerhalb des Koppelgliedes (9) eingesetzt ist.

9. Messsaite nach Anspruch 8, dadurch gekennzeichnet, dass die Feder (23) die Gestalt eines geschlossenen Ringes mit runder, abgeplatteter oder mehreckiger Form aufweist.

10. Messsaite nach Anspruch 9, dadurch gekennzeichnet, dass zwei Federn (23) in Serie im Koppelglied (9) eingesetzt sind.

11. Messsaite nach Anspruch 6, dadurch gekennzeichnet, dass die Federn (23) einen wellenförmigen oder mäanderförmigen Verlauf aufweisen und die Koppelglieder (9) bilden.

12. Messsaite nach einem der Ansprüche 1 bis 11, dadurch gekennzeichnet, dass die elastischen Lappen (13) rechteckig oder gegen ihr freies Ende hin divergierend oder konvergierend ausgebildet sind.

## Claims

1. A flat one-piece measuring string (1) which is intended to vibrate in a direction (A) perpendicularly to its rest plane (B), comprising two fixing plates (3), a vibrating string (15) and two coupling portions (9) connecting the vibrating string (15) to the fixing plates (3), and two node regions (19) at the connections of the vibrating string (15) to the coupling portions (9), wherein arranged at the vibrating string side at each of the node regions (19) are two soft-elastic plates (13) which extend parallel to the vibrating string (15) and which are connected to the node regions (19) at one side and which also vibrate in opposite phase relationship perpendicularly to the rest plane (B) and whose ends (17) are disposed at a spacing in mutually opposite relationship and whose thickness (s) corresponds to the thickness of the other portions of the measuring string (1) and which extend in the rest plane (B) on both sides of the vibrating string (15).

2. A measuring string according to claim 1 characterised in that the mean width (c) of the resilient plates (13) is greater than the width (b) of the vibrating string (15).

3. A measuring string according to one of claims 1 and 2 characterised in that the width (b) of the vibrating string (15) is greater than the thickness (s) thereof.

4. A measuring string according to one of claims 1 to 3 characterised in that it is produced by etching.

5. A measuring string according to one of claims 1 to 4 characterised in that the node region (19) is of a triangular configuration, wherein the two resilient plates (13) and an end of the vibrating string, disposed in line, adjoin a side of the triangle, and that the coupling portion (9) is attached at the point of intersection of the other two sides.

6. A measuring string according to one of claims 1 to 5 characterised in that a respective spring (23) is provided between the vibrating string (15) and the clamping locations (hole 5) on the fixing plate (3).

7. A measuring string according to claim 6 characterised in that the spring (23) is formed by a slot (29) following the contour of the clamping plate (3).

8. A measuring string according to claim 6 characterised in that the spring (23) is disposed between the two ends connecting the coupling portion (9) to the fixing plates (3) and the vibrating string (15) within the coupling portion (9).

9. A measuring string according to claim 8 characterised in that the spring (23) is in the form of a closed ring of round, flattened-off or polygonal shape.

10. A measuring string according to claim 9 characterised in that two springs (23) are disposed in series in the coupling portion (9).

11. A measuring string according to claim 6 characterised in that the springs (23) are of a wave-like or meander-like configuration and form the coupling portions (9).

12. A measuring string according to one of claims 1 to 11 characterised in that the resilient plates (13) are rectangular or diverge or converge towards their free end.

## Revendications

1. Corde de mesure plate (1) d'une seule pièce, conçue pour vibrer dans une direction (A) perpendiculaire à son plan de repos (B) et comportant deux pattes de fixation (3), une corde vibrante (15) et deux éléments d'accouplement (9) reliant la corde vibrante (15) aux pattes de fixation (3), ainsi que deux zones nodales (19) prévues aux points de jonction de la corde vibrante (15) avec les éléments d'accouplement (9), deux pattes souples (13) parallèles à la corde vibrante (15), reliées d'un côté aux zones nodales (19) et vibrant en opposition de phase perpendiculairement au plan de repos (B) étant disposées au niveau de chacune des zones nodales (19) côté corde vibrante, les extrémités (17) desdites pattes souples se faisant face à distance, leur épaisseur (s) correspondant à l'épaisseur des autres éléments constitutifs de la corde de mesure (1), et lesdites pattes souples s'étendant dans le plan de repos (B) de part et d'autre de la corde vibrante (15).

2. Corde de mesure selon la revendication 1, caractérisée en ce que la largeur moyenne (c) des pattes élastiques (13) est supérieure à la largeur (b) de la corde vibrante (15).

3. Corde de mesure selon l'une des revendications 1 ou 2, caractérisée en ce que la largeur (b) de la corde vibrante (15) est supérieure à son épaisseur (s).

4. Corde de mesure selon l'une des revendications 1 à 3, caractérisée en ce qu'elle est fabriquée par attaque chimique.

5. Corde de mesure selon l'une des revendications 1 à 4, caractérisée en ce que la zone nodale (19) est de forme triangulaire, les deux pattes élastiques (13) et l'une des extrémités de la corde vibrante étant contiguës à l'un des côtés du triangle suivant une ligne, et en ce que l'élément d'accouplement (9) est attaché au point d'intersection des deux autres côtés.

6. Corde de mesure selon l'une des revendications 1 à 5, caractérisée en ce qu'un ressort (23) est prévu entre la corde vibrante (15) et chacun des points de serrage (trou 5) situés sur la patte de fixation (3).

7. Corde de mesure selon la revendication 6, caractérisée en ce que le ressort (23) est constitué par une fente (29) épousant le contour de la patte de serrage (3).

8. Corde de mesure selon la revendication 6, caractérisée en ce que le ressort (23) se trouve à l'intérieur de l'élément d'accouplement (9) entre les deux extrémités reliant l'élément d'accouplement (9) aux pattes de fixation (3) et à la corde vibrante (15).

9. Corde de mesure selon la revendication 8, caractérisée en ce que le ressort (23) présente l'aspect d'un anneau fermé de forme ronde, aplatie ou polygonale.

10. Corde de mesure selon la revendication 9, caractérisée en ce que deux ressorts (23) sont disposés en série dans l'élément d'accouplement (9).

11. Corde de mesure selon la revendication 6, caractérisée en ce que les ressorts (23) présentent un tracé ondulé ou sinueux et forment les éléments d'accouplement (9).

12. Corde de mesure selon l'une des revendications 1 à 11, caractérisée en ce que les pattes élastiques (13) sont de forme rectangulaire ou sont conçues de façon à diverger ou à converger en direction de leur extrémité libre.
